Europäisches Patentamt

European Patent Office

Office européen des brevets

(11) Veröffentlichungsnummer: **0 398 266**
**A2**

(12) **EUROPÄISCHE PATENTANMELDUNG**

(21) Anmeldenummer: **90109161.1**

(22) Anmeldetag: **15.05.90**

(51) Int. Cl.5: **G02B 6/36**

(30) Priorität: **18.05.89 AT 1192/89**

(43) Veröffentlichungstag der Anmeldung:
**22.11.90 Patentblatt 90/47**

(84) Benannte Vertragsstaaten:
**AT BE CH DE DK ES FR GB GR IT LI LU NL SE**

(71) Anmelder: **DR. TECHN JOSEF ZELISKO,**
**FABRIK FÜR ELEKTROTECHNIK UND**
**MASCHINENBAU GESELLSCHAFT M.b.H.**
**Steinfelder Gasse 12**
**A-2340 Mödling(AT)**

(72) Erfinder: **Pöltl, Johann**
**Maynologasse 36**
**A-2500 Baden(AT)**

(74) Vertreter: **Wolke, Heidemarie, Dr.**
**Stadtplatz 7**
**A-4400 Steyr(AT)**

(54) **Positioniervorrichtung für das Ende eines Lichtleiters.**

(57) Die Erfindung beschreibt eine Positioniervorrichtung für das Ende eines Lichtleiters (8). Diese umfaßt ein Führungsgehäuse (43) und eine dieses durchsetzende Aufnahmebohrung (47), in der der Lichtleiter (8) gehaltert ist. Der Lichtleiter (8) ist mit einem radial über seinen Außenumfang vorspringenden Arretierelement (40) versehen. Dieses bildet gemeinsam mit einem diesem in der von seinem Ende abgewandten Richtung zugeordneten Anschlagelement (42) eine Rückhaltevorrichtung (44).

Fig. 3

EP 0 398 266 A2

## Positioniervorrichtung für das Ende eines Lichtleiters

Die Erfindung betrifft eine Positioniervorrichtung für das Ende eines Lichtleiters mit einem Führungsgehäuse und einer dieses durchsetzenden Aufnahmebohrung, in der der Lichtleiter gehaltert ist.

Es ist bereits bekannt, die Enden einzelner Lichtleiter in Führungsgehäusen anzuordnen, um die Abstrahlungsfläche exakt, beispielsweise gegenüber einer Linsenanordnung zu zentrieren, um eine möglichst hohe Lichtausbeute zu erzielen. Die Halterung der Enden der Lichtleiter erfolgt dadurch, daß diese in hülsenförmige Führungsgehäuse eingeklebt werden. Die Führungsgehäuse werden dann in Halterungen von Linsenanordnungen positioniert und über Schrauben oder Kleber in diesen fixiert. Nachteilig war bei diesen Ausführungsformen, daß es bei insbesondere wechselnden Zug- und Druckbeanspruchungen zur Verlagerung der Stirnfläche des Lichtleiters, beispielsweise relativ zum Brennpunkt einer Linsenanordnung, gekommen ist, wodurch die Lichtausbeute nicht immer den gewünschten Wert erreicht hat.

Der Erfindung liegt daher die Aufgabe zugrunde, eine Lichtleiterhalterung der eingangs genannten Art zu schaffen, mit der es möglich ist, die Lichtleiter bei hohen Zug- oder Druckbeanspruchungen in Längsrichtung des Lichtleiters auch über einen längeren Zeitraum einwandfrei in einer gewünschten Position zu halten.

Diese Aufgabe der Erfindung wird dadurch gelöst, daß der Lichtleiter mit einem radial über seinen Außenumfang vorspringenden Arretierelement versehen ist, das gemeinsam mit einem diesem in der von seinem Ende abgewandten Richtung zugeordneten Anschlagelement eine Rückhaltevorrichtung bildet. Durch die überraschend einfach erscheinende Lösung wird nunmehr sichergestellt, daß vor allem bei in Längsrichtung des Lichtleiters auftretenden Zugbeanspruchungen, auch dann, wenn es sich um Wechselbeanspruchungen handelt, keine Verlagerung der Stirnfläche des Lichtleiters gegenüber einer vorgewählten Position eintritt und somit ein optimaler Lichtübergang und eine Lichtausbeute erzielt wird. Vor allem kann dadurch auch über eine längere Einsatzdauer eine gleichmäßige Lichtabgabe einer derartigen Linsenanordnung sichergestellt werden. Dies ist besonders für jene Anlagen wichtig, bei welchen die Abstrahlungsflächen bzw. Linsenanordnungen in schwer zugänglichen oder gefährdeten Bereichen angeordnet sind und die daher über Lichtleiterstränge mit einer zentralen Lichtquelle, die außerhalb des gefährdeten Bereiches leicht zugänglich angeordnet ist, verbunden sind. Dies trifft insbesondere für viele Sicherungsanlagen, insbesondere Eisenbahnsicherungsanlagen zu, bei welchen es noch dazu darauf ankommt, entsprechende Lichtstärken für den ordnungsgemäßen Betrieb zum Erkennen meist unterschiedlicher Signale dieser Lichtsignalanlagen einwandfrei zu erhalten. Dadurch ist es in einfacher Weise auch möglich, die bereits bei der Montage auftretenden unterschiedlichen Zugbeanspruchungen in den einzelnen Lichtleitern durch das Biegen von Lichtleiterbündeln bei der Verlegung in winkeligen Kabelkanälen ohne eine nachteilige Beeinflussung der abgestrahlten Lichtenergie zu ermöglichen. Hinzu kommt als überraschender Vorteil, daß von allem bei einer Warmverformung des Endes des Lichtleiters zur Schaffung der Arretierelemente eine höhere Oberflächengüte der Stirnfläche des Lichtleiters und damit eine zusätzliche Qualitätsverbesserung der Lichtübertragung erzielt werden kann.

Des weiteren ist es auch möglich, daß die Rückhaltevorrichtung einen Gegenhalter aufweist, der mit einem Stützteil für eine Stirnfläche des Lichtleiters versehen ist, die zumindest in dem mit dem Querschnitt des Lichtleiters fluchtenden Querschnittsbereich lichtdurchlässig ausgebildet ist, weil dadurch der Lichtleiter auf überraschend einfache Weise gegen eine axiale Verschiebung entgegen der Wirkung der Rückhaltevorrichtung gesichert ist.

Möglich ist es weiters aber auch, daß zwischen der Stirnfläche und den Arretierelementen und bzw. oder dem Stützteil eine Schicht aus transparentem, lichtdurchlässigem Harz angeordnet ist. Dadurch wird unabhängig von Fertigungstoleranzen bei der Herstellung des Lichtleiterendes und der Positioniervorrichtung ein Luftspalt zwischen der Lichtaustrittsfläche des Lichtleiters und dem einer Linse oder Streuscheibe zugeordneten Stützteil vermieden. Es wird dadurch ein insgesamt höherer Wirkungsgrad erreicht, da es zu keinen Verlusten, wie sie bei der mehrfachen Brechung von Lichstrahlen beim Übergang von einem Medium in ein anderes entstehen, kommt.

Nach einer weiteren Ausführungsform ist vorgesehen, daß das Führungsgehäuse das Anschlagelement bildet und im Bereich einer Symmetrieebene der Aufnahmebohrung geteilt ausgebildet ist und vorzugsweise die beiden Teile des Führungsgehäuses identisch ausgebildet sind. Dies wirkt sich als überraschender Vorteil insbesondere bei der Montage von sehr langen Lichtleitern aus, da diese nicht, wie sonst bei solchen Verbindungen erforderlich, in eine Öffnung eingefädelt werden müssen, sondern vor der Montage in die Teile des Führungsgehäuses eingelegt werden können. Ein weiterer überraschender Vorteil dieser Ausführung ist, daß die Herstellung von in einer Symmetrieebene geteilten Körpern in Werkzeugen, insbesondere beim Spritzgießen, einfacher möglich ist und geringere Werkzeugkosten verursacht, wodurch sich in solcher Art geformte Teile auch bereits bei kleineren bis mittleren Serien kostengünstig herstellen lassen. Darüber hinaus liegt ein weiterer überraschender Vorteil in der technisch wie auch wirtschaftlich günstigen Herstellung von Gleichteilen, was sich vor allem vorteilhaft bei allen Fertigungsverfahren, bei welchen Formen benötigt werden, wie z.B. beim Spritzgießen auswirkt.

Vorteilhaft ist es aber auch, wenn ein Durchmesser der Aufnahmebohrung einem Außendurchmesser des Lichtleiters entspricht, weil dadurch der Lichtleiter eine zentrische Position einnimmt und in dieser ohne weitere Teile positioniert wird.

Vorgesehen ist aber auch, daß ein Durchmesser der Aufnahmebohrung größer ist als ein Basisdurchmesser eines die Arretierelemente umgebenden, konzentrisch zum Lichtleiterquerschnitt angeordneten Hüllkreises. Dadurch kann das mit Arretierelementen versehene Ende des Lichtleiters in eine einstückige, hülsenförmige Halterung eingeführt werden.

Es ist aber auch möglich, daß das Anschlagelement durch eine Stützscheibe bzw. -hülse gebildet ist, die radial elastisch verformbar und mit einem Schlitz versehen oder entlang einer Symmetrieebene entlang einer Längsmittelachse einer Aufnahmebohrung geteilt ausgebildet ist, weil dadurch komplizierte Bauteile, wie sie sonst für die Aufgabenstellung erforderlich wären, nicht mehr erforderlich sind.

Möglich ist es aber auch, daß die Bohrung des Anschlagelementes einen Innendurchmesser aufweist, der im wesentlichen dem Außendurchmesser des Lichtleiters entspricht, weil damit zusätzliche Elemente z.B. Positionierhülsen, etc. eingespart werden können.

Nach einer anderen Ausführungsform ist vorgesehen, daß die zweiteilige Stützhülse mit einem kegelförmigen Außenmantel versehen ist, der sich vom Arretierelement in Richtung des Lichtleiters verjüngt und daß der Stützhülse eine kegelförmige Stützfläche in der Aufnahmebohrung bzw. dem Führungsgehäuse zugeordnet ist, wobei vorzugsweise der Kegelwinkel in Abhängigkeit vom Material des Positioniergehäuses bzw. der Stützhülsen so gewählt ist, daß eine Selbsthemmung erreicht ist. Durch die Wirkung der kegelförmigen Stützfläche wird der Lichtleiter in der Aufnahmebohrung bei einer Kraftaufbringung in Richtung der Verjüngung in der Aufnahmebohrung der zweiteiligen Stützhülse gespannt. Durch die selbsthemmende Ausführung wird auch der Lichtleiter in axialer Richtung gegen ein unbeabsichtigtes Verschieben fixiert.

Vorgesehen ist aber auch, daß das Führungsgehäuse mit einer Führungsfläche für den Stützteil versehen ist, wodurch zusätzliche Zentrier- und Positioniermittel nicht erforderlich sind.

Möglich ist es aber auch, daß zwischen dem Positioniergehäuse und dem Führungsgehäuse eine Verbindungsvorrichtung vorgesehen ist. Dadurch wird überraschend einfach eine wirkungsvolle Verbindung der Teile erreicht, und ein unbeabsichtigtes Lösen der Teile voneinander vermieden, was speziell dort, wo an solche Systeme hohe Sicherheitsanforderungen, wie z.B. im Eisenbahnsicherungswesen, gestellt werden müssen, von großer Bedeutung ist.

Nach einer anderen Ausführungsform ist vorgesehen, daß die Verbindungsvorrichtung durch vorzugsweise am Führungsgehäuse angeformte, einen radial vorstehenden Ansatz des Positioniergehäuses umgreifende, in radialer Richtung elastisch verformbare Schnappfinger gebildet ist. Durch die einstückige Ausbildung der Verbindungsvorrichtung mit dem Führungsgehäuse können Bauteile eingespart werden. Neben dem wirtschaftlichen Aspekt ist der überraschende technische Vorteil einer solchen Lösung in der Reduzierung der Verbindungsstellen zu sehen, und es wird die Manipulation beim Verbinden der Teile vereinfacht.

Möglich ist es aber auch, das Arretierelement durch eine thermische Stauchung des Endes des Lichtleiters auf einen Basisdurchmesser, der größer als der Außendurchmesser des Lichtleiters gebildet ist, wodurch die entsprechenden Arretierelemente sehr einfach gebildet werden können und dabei gleichzeitig eine hohe Oberflächengüte an der Lichtaustrittsfläche erreicht wird.

Vorteilhaft ist es weiters, wenn die beiden Teile des Führungsgehäuses mit einer Zentriervorrichtung versehen sind, die beispielsweise durch Zentrierdorne und diesen zugeordnete gegengleiche Zentrierbohrungen gebildet ist, wodurch die längs einer Symmetrieebene geteilt ausgeführten Führungsgehäuse bei ihrer Montage überraschend einfach in der richtigen Lage zusammengefügt werden können und lagegenau positioniert sind.

Wie es auch vorteilhaft ist, wenn auf der von der Rückhaltevorrichtung abgewendeten Seite des Führungsgehäuses zwischen diesem und dem Lichtleiter ein aus elastisch verformbarem Material bestehendes Schutzelement angeordnet ist. Durch die Schutzhülse wird überraschend einfach ein Knicken des Lichtleiters an der Austrittsstelle des Führungsgehäuses aber auch eine Beschädigung der sehr hochwertigen Oberfläche des Lichtleiters verhindert.

Es ist auch möglich, daß das Schutzelement über einen vorspringenden Bund in einer Nut des Führungsgehäuses gehaltert ist, wodurch die Schutzhülse in ihrer Lage einwandfrei positioniert im Führungsgehäuse gehalten ist und diese auch bei stärkerer Beanspruchung der Positioniervorrichtung nicht verändert wird, wodurch die Austrittsstelle des Lichtleiters aus dem Führungsgehäuse dauerhaft geschützt ist.

Nach einer weiteren Ausbildungsform ist vorgesehen, daß der Stützteil in seinem dem Ende des Lichtleiters zugewandten Endbereich mit einem Führungsansatz versehen ist, wodurch überraschend einfach die Ankoppelung von Signalgeräten zur Weiterübertragung des Lichtsignals möglich wird.

Weiters ist es auch möglich, daß der Führungsansatz in einer Halterung einer Linsenanordnung angeordnet ist, wodurch in technisch einwandfreier Weise eine Abstimmung zwischen Lichtaustrittsquerschnitt und Brennpunkt einer Linse möglich ist.

Nach einer anderen Ausführungsform ist vorgesehen, daß das Schutzelement mit einem Schlitz versehen oder zweiteilig ausgebildet ist, wodurch unabhängig von der Form des Lichtleiterendes und seiner Arretierelemente die Schutzhülse auf den Lichtleiter aufgebracht werden kann.

Möglich ist aber auch, daß das Führungsgehäuse mit einem sich zumindest bis in den Bereich der Stirnfläche des Lichtleiters erstreckenden Fortsatz versehen ist, der einen inneren Durchmesser aufweist, der größer ist als der Basisdurchmesser des Hüllkreises, weil dadurch die Stirnfläche des Lichtleiters sehr nahe am Stützteil des Traggehäuses angeordnet sein kann und im Zusammenwirken mit dem Führungsgehäuse auch ohne Luftspalt an den Stützteil anpreßbar ist.

Nach einer weiteren Ausbildungsform ist vorgesehen, daß das Führungsgehäuse bzw. die Teile des Führungsgehäuses bezogen auf eine Stirnseite des Fortsatzes spiegelsymmetrisch ausgebildet sind und zwischen den beiden einander gegenüberliegenden Anschlagelementen die Arretierelemente von zwei aufeinander zugerichteten, einander unmittelbar benachbarten Lichtleitern angeordnet sind, weil dadurch überraschend einfach eine Kupplungsvorrichtung für Lichtleiter erreicht ist.

Nach einer anderen Weiterbildung ist es aber auch vorteilhaft, wenn zwei Führungsgehäuse mit den Stirnseiten der Fortsätze spiegelsymmetrisch zueinander angeordnet und über eine Kupplungsanordnung z.B. eine Holländerverschraubung oder über eine Schnappvorrichtung mit radial beweglichen Schnapparmen verbunden sind, wodurch sich solche Positioniervorrichtungen in überraschend einfacher Weise für Verlängerungen von Lichtleitern eignen, wobei die Montage sehr einfach vorgenommen werden kann und keine speziellen Werkzeuge erfordert.

Es ist aber auch möglich, daß zwischen den einander zugewandten Stirnflächen der beiden Lichtleiter eine Schicht aus transparentem, lichtdurchlässigem Harz angeordnet ist, wodurch Stützteile zur Positionierung der Lichtleiter nicht erforderlich sind und zwischen den einander zugewandten Stirnflächen der beiden Lichtleiter ein homogenes Medium angeordnet werden kann, welches keine speziellen Festigkeitseigenschaften aufweisen muß und daher nur in Hinblick auf dessen Eignung zur Lichtweiterleitung ausgewählt werden kann.

Vorteilhaft ist es aber auch, wenn die beiden spiegelsymmetrisch zueinander angeordneten Führungsgehäuse über die diesen zugeordneten Stützteile oder einen diesen beiden Führungsgehäusen gemeinsam zugeordneten, symmetrisch ausgebildeten Stützteil miteinander verbunden sind, wodurch eine einwandfreie zentrische Positionierung der Führungsgehäuse erreicht wird.

Möglich ist es auch, daß der Stützteil die Kupplungsanordnung zwischen den beiden Führungsgehäusen bildet, weil dadurch eine insgesamt kurze Baulänge für eine Kupplungsvorrichtung erreicht wird und damit die Stirnflächen der einander gegenüberliegend angeordneten Lichtleiter sehr nahe aneinander angeordnet werden können.

Nach einer anderen Ausführungsform ist vorgesehen, daß die Verbindung zwischen den einzelnen Teilen des Führungsgehäuses und bzw. oder zwischen einzelnen Führungsgehäusen und bzw. oder zwischen dem Führungsgehäuse und dem Stützteil über einen Kleber oder eine Ultraschallverschweißung oder dgl. erfolgt, weil dadurch insbesondere bei der Herstellung von sogenannten Standardelementen, z.B. mit vorbestimmten Längen für Verbindungszwecke, wirtschaftlich vorgegangen werden kann. Darüber hinaus ist eine solche Ausführung speziell bei höheren Belastungen, bei einem höheren Sicherheitsrisiko, aber auch für eine höhere Lebensdauer solcher Verbindungen zweckmäßig.

Die Erfindung betrifft auch ein Verfahren zur Halterung der Enden von einzelnen Lichtleitern in einem Führungsgehäuse über eine Rückhaltevorrichtung, bei der der Lichtleiter in einer vorbestimmten Lage zu einer Führungsfläche des Traggehäuses bzw. eines Stützteils gehaltert ist.

Nach diesem Verfahren ist vorgesehen, daß der Lichtleiter im Bereich eines Endes in eine Form eingespannt wird, die einen den Außendurchmesser des Lichtleiters überragenden, sich in Richtung des Endes des Lichtleiters erstreckenden Hohlraum aufweist, der einen größeren Querschnitt aufweist, als der Außendurchmesser des Lichtleiters und der Lichtleiter eine dem Ende desselben zugewandte Formfläche um eine Länge, die größer ist als eine Tiefe des Formhohlraums, überragt, worauf das in den Formhohlraum hineinragende Ende des Lichtleiters soweit erhitzt wird, daß es einen teigigen Zustand erreicht und durch Druckbeaufschlagung der Formhohlraum mit dem Material des Lichtleiters gefüllt wird. Dadurch kann das Ende eines Lichtleiters in überraschend einfacher Weise und ohne daß ein angrenzender Bereich bzw. die Oberfläche des Lichtleiters qualitätsschädigend belastet wird, umgeformt werden. Durch die Gestaltung des Formhohlraums kann darüber hinaus dem Lichtleiterende die für die Verwendung einer Positioniervorrichtung bestens geeignete Form gegeben werden. dauerhaft.

Möglich ist aber auch, daß das Lichtleitermaterial auf den Schmelzpunkt des Lichtleitermaterials erhitzt wird, worauf die Erhitzung so lange fortgesetzt wird, bis der Formhohlraum mit dem Kunststoffmaterial gefüllt ist, da durch das freie Fließen des Kunststoffes bei manchen Materialien eine höhere Oberflächengüte erzielbar ist.

Schließlich ist es auch von Vorteil, wenn während des Erhitzens des Lichtleiters die an den Formhohlraum anschließenden Teile des Lichtleiters gekühlt werden, da dadurch verhindert werden kann, daß bei der Warmumformung des Lichtleiters an die Arretierelemente anschließende Bereiche desselben bzw. der Flächenbeschichtung nicht nachteilig verändert werden.

Zum besseren Verständnis der Erfindung wird diese im nachfolgenden anhand der in den Zeichnungen dargestellten Ausführungsbeispiele näher erläutert.

Es zeigen:

Fig. 1 eine Signalanordnung mit Signallichter, die über ein Bündel von Lichtleitern mit einer Lichtquelle unter Verwendung der erfindungsgemäßen Vorrichtung verbunden sind, in Stirnansicht;

Fig. 2 die Signalanordung gemäß Fig.1 in Seitenansicht;

Fig. 3 das zwischen dem Signallicht und der Lichtquelle angeordnete Bündel von Lichtleitern mit der erfindungsgemäßen Vorrichtung zum Halten des Bündelendes in Seitenansicht teilweise geschnitten;

Fig. 4 eine erfindungsgemäß ausgebildete Lichtleiterhalterung in Seitenansicht geschnitten, gemäß den Linien IV-IV in Fig.5;

Fig. 5 die Lichtleiterhalterung in Stirnansicht geschnitten, gemäß den Linien V-V in Fig.4;

Fig. 6 eine andere Ausführungsform der Lichtleiterhalterung in Seitenansicht geschnitten, gemäß den Linien VI-VI in Fig.7;

Fig. 7 die Lichtleiterhalterung nach Fig.6 in Stirnansicht geschnitten, gemäß den Linien VII-VII in Fig.6;

Fig. 8 eine andere Ausführungsvariante einer Lichtleiterhalterung mit einer zweiteiligen konischen Stützhülse in Seitenansicht geschnitten;

Fig. 9 die Lichtleiterhalterung nach Fig.8 in Stirnansicht;

Fig. 10 eine Lichtleiterhalterung in einer Ausführung als Kupplungsvorrichtung zwischen zwei Lichtleitern in Seitenansicht geschnitten;

Fig. 11 eine andere Ausführungsform einer als Kupplungsvorrichtung zwischen zwei Lichtleitern ausgebildeten Lichtleiterhalterung in Seitenansicht geschnitten;

Fig. 12 die Lichtleiterhalterung in Stirnansicht geschnitten, gemäß den Linien XII-XII in Fig. 11;

Fig. 13 die Lichtleiterhalterung in Stirnansicht geschnitten, gemäß den Linien XIII-XIII in Fig.11.

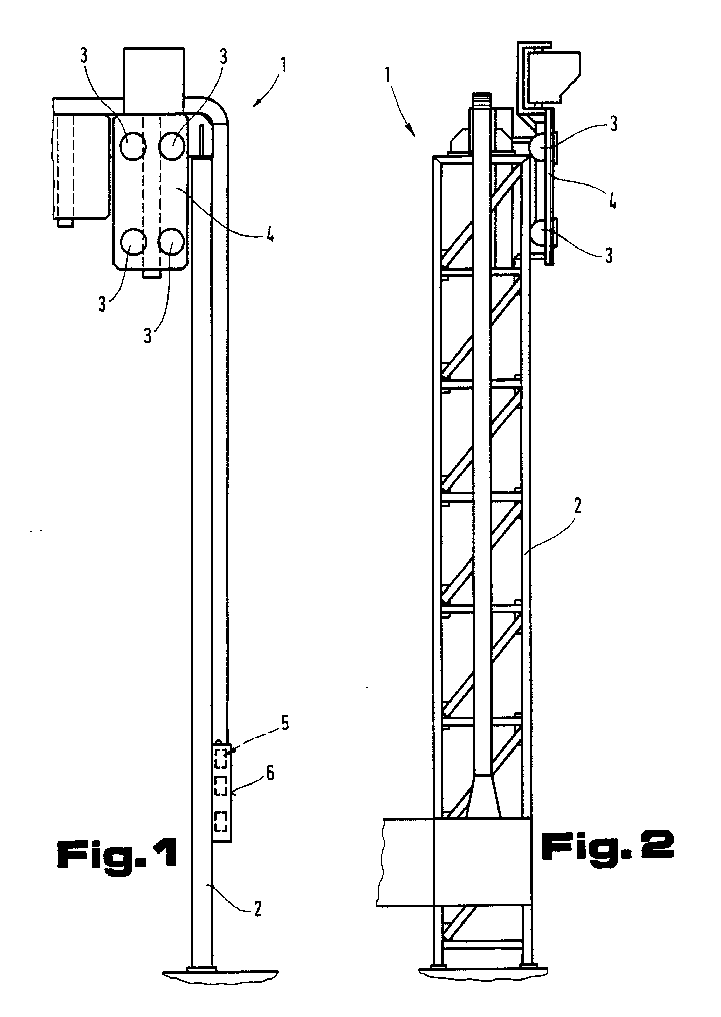

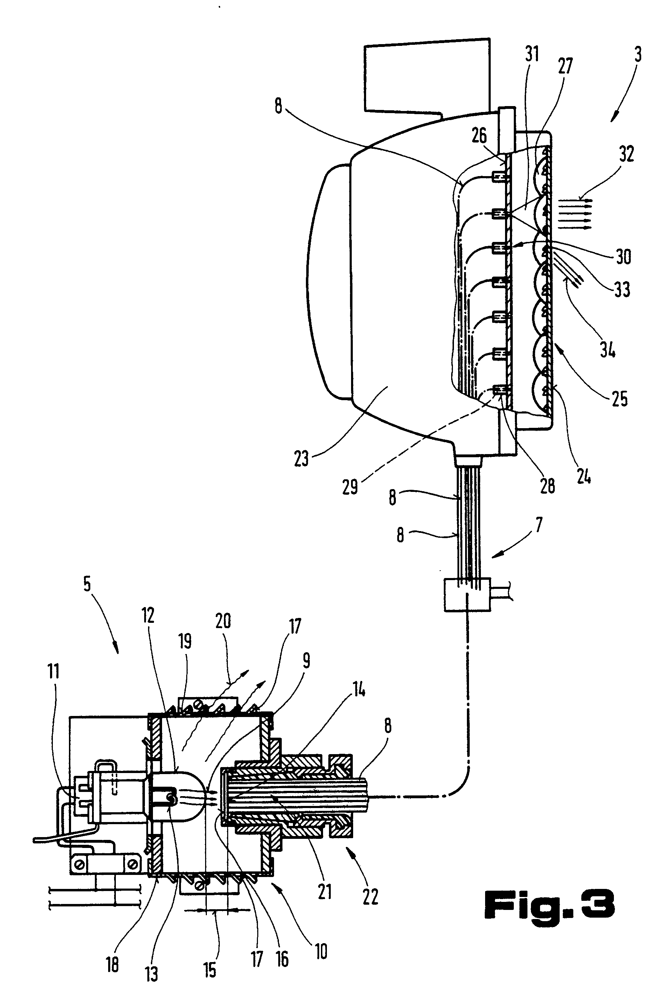

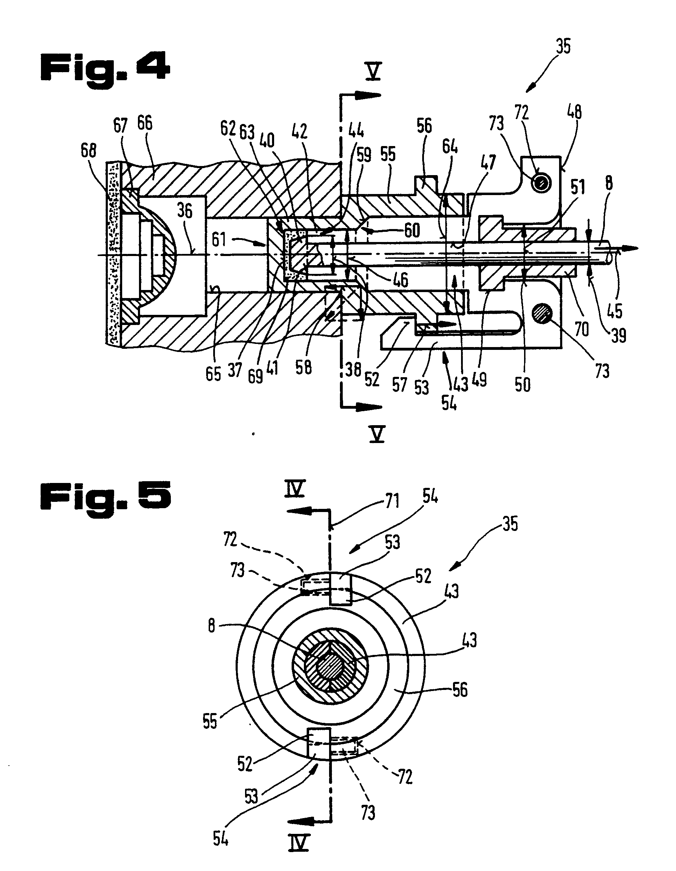

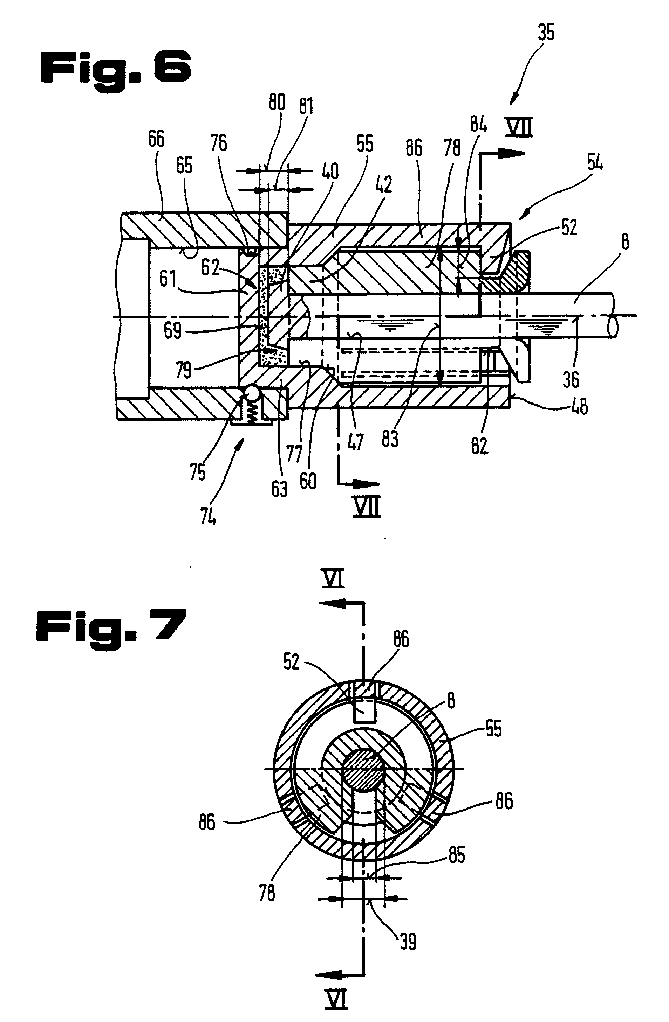

In Fig.1 und Fig.2 ist eine Signalanordnung 1 gezeigt, wie sie beispielsweise bei den Eisenbahnen zum Einsatz kommt. Diese Signalanordnung 1 umfaßt ein Traggerüst 2, an welchem im Abstand oberhalb der Gleise Signallichter 3 angeordnet sind. Bedingt durch die immer höher werdenden Geschwindigkeiten von Eisenbahnzügen, wird die Wartung insbesondere der Lampentausch bei derartigen Signallichtern, in welchen die Lampen unmittelbar im Bereich eines Signalschildes 4 angeordnet sind, immer schwieriger. Vielfach bedürfte es zum Austauschen der Lampen in derartigen Signallichtern 3 der Unterbrechung des Zugsverkehrs auf dieser Strecke, sodaß ein gefahrloses Austauschen durch die Bedienungsperson möglich ist.

Um diesem Übelstand abzuhelfen und eine Wartung bzw. einen Lampentausch für die Signallichter 3 völlig unabhängig vom Zugverkehr durchführen zu können, sind bei neuen Signalanordnungen 1 Lampenanordnungen 5 im Bereich des Traggerüstes 2 bzw. unmittelbar neben diesen vorgesehen, die am Boden aufgestellt oder in einer vom Boden aus ohne zusätzliche Hilfsmittel zugänglichen Höhe in einem Schaltkasten 6 angeordnet sind.

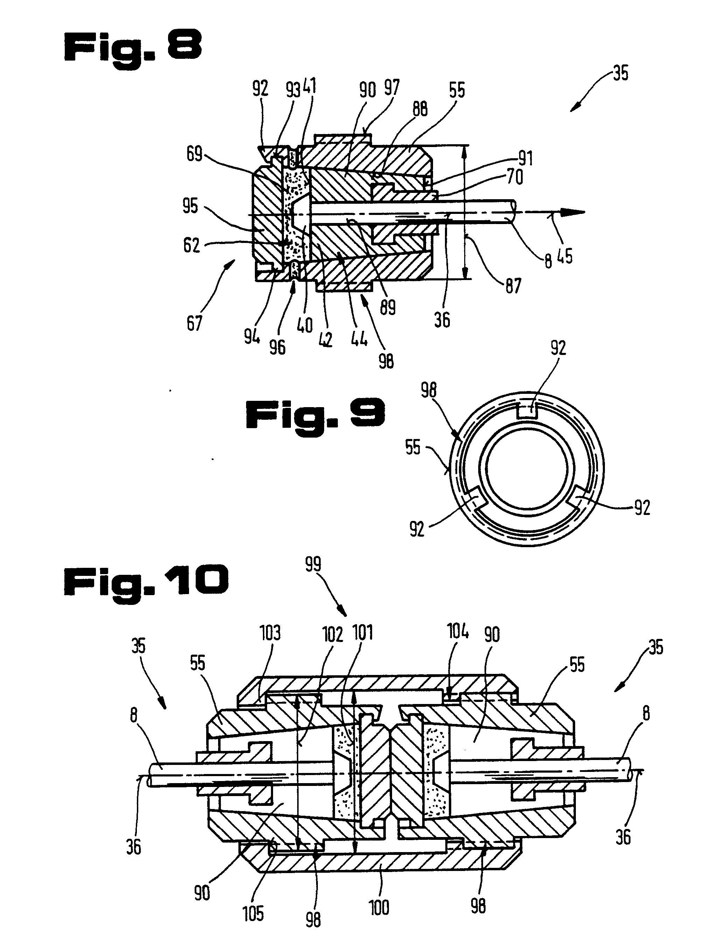

Wie nun besser aus Fig.3 zu ersehen ist, erfolgt die Verbindung zwischen einer Lampenanordnung 5 und einem Signallicht 3 durch ein Bündel 7 aus Lichtleitern 8. Um eine derartige Verbindung wirkungsvoll zu gestalten, ist es notwendig, daß schematisch durch Pfeile angedeutete Lichtstrahlen 9 möglichst ungehindert und ohne Verlust in das Bündel 7 aus Lichtleitern 8 eintreten können. Dazu ist vorgesehen, daß die Lampenanordnung 5 ein Lampengehäuse 10 aufweist, in der über einen Bajonettverschluß 11 eine Lampe 12, meist eine Halogenlampe, mit einem Leuchtfaden 13 angeordnet ist. Da beim Betrieb der Lampe 12 eine entsprechend hohe Wärmeenergie frei wird, ist es notwendig, eine Stirnseite 14 des Bündels 7 aus Lichtleitern 8 in einer Distanz 15 von der Lampe 12 anzuordnen. Um aufgrund der dabei doch auftretenden relativ hohen Temperaturen ein Anschmelzen der Lichtleiter 8 im Bereich der Stirnseite 14 zu verhindern, ist zwischen der Lampe 12 und der Stirnseite 14 eine Filteranordnung 16 angeordnet. Dieser Filter kann auch gleichzeitig dazu dienen, nur die gewünschte Farbe aus dem Lichtbündel herauszufiltern. Zusätzlich ist das Lampengehäuse 10 derart angeordnet, daß Lüftungsschlitze 17 in Seitenwänden 18,19 in vertikaler Richtung übereinander angeordnet sind. Dadurch kann die im Inneren des Lampengehäuses 10 erhitzte Luft, die schematisch durch Pfeil 20 angedeutet ist, nach oben entweichen, bzw. wird durch die Thermosifonwirkung immer wieder kühle Luft in das Lampengehäuse 10 hineingezogen.

Um eine möglichst hohe Lichtausbeute bzw. einen möglichst geringen Lichtverlust beim Übergang von der Lampe 12 in das Bündel 7 aus Lichtleitern 8 zu ermöglichen, ist ein Ende 21 des Bündels 7 aus Lichtleitern 8 in einer Haltevorrichtung 22 eingespannt und gehalten. Das Bündel 7 aus Lichtleitern 8 führt zum Signallicht 3, welches aus einem Gehäuse 23, einer Frontscheibe 24, einer Linsenanordnung 25 und einer Tragplatte 26 besteht. In der Tragplatte 26 sind in einem Brennpunkt der einzelnen Linsen 27 der Linsenanordnung 25 in entsprechendem Abstand bzw. Raster Führungsnippel 28 mit Bohrungen 29 für jeweils einen Lichtleiter 8 angeordnet. Mittels dieser Führungsnippel 28 sind somit die der Haltevorrichtung 22 gegenüberliegenden Enden der Lichtleiter 8 unter Bezug auf die einzelnen Linsen 27 genau positioniert, wobei sich ein Ende 30 eines Lichtleiters 8 ziemlich exakt in einem Brennpunkt der Linse 27 befindet. Das aus dem Ende 30 der Lichtleiter 8 austretende Lichtbündel 31 bewirkt eine vollständige Ausleuchtung der der Frontscheibe 24 zugewandten Oberfläche der Linse 27 und die Aussendung eines im wesentlichen aus Parallellicht bestehenden Strahlenbündels 32, wobei die Ausrichtung der einzelnen Strahlenbündel und somit die Wirkungsfläche des Signallichtes 3 durch die Anordnung und Winkelstellung der einzelnen Linsen 27 erreicht werden kann. Zudem sind in dem der Frontscheibe 24 zugewandten Bereich der Linsen 27 Umlenkprismen 33 angeordnet, mit welchen einzelne Lichtstrahlen 34 in einer zum Strahlenbündel 32 winkelig verlaufenden Richtung umgelenkt werden können. Damit ist es möglich, im Nahebereich der Signalanordnung 1 eine in Richtung der Schienen gerichtete Lichtabstrahlung zu ermöglichen, sodaß von einem im Bereich unmittelbar vor der Signalanordnung haltenden Triebfahrzeug ebenfalls die Stellung der Signalanordnung 1 erkannt und einwandfrei abgelesen werden kann. Gleichzeitig wird aber die Abstrahlung des Strahlenbündels 32 über große Distanzen von der Signalanordnung 1 nicht behindert, sodaß das Signalbild auch auf große Entfernungen und bei schlechten Sichtverhältnissen einwandfrei wahrgenommen werden kann. Durch die gleichmäßige Verteilung der im Bereich der Lampe 12 in das Bündel 7 aus Lichtleitern 8 eingebrachten Lichtenergie über die gesamte Frontscheibe 24 wird eine gleichmäßige Lichtabstrahlung ermöglicht und außerdem eine spiegelfreie Abbildung des jeweiligen Signalstandes ermöglicht. Vor allem durch die Verwendung von spiegelfreien Frontscheiben 24 und den Wegfall von Mehrfachumlenkungen und die Verwendung von transparenten Sammellinsen wird gleichzeitig ein Phantombild bei unterschiedlichsten Fremdlichteinstrahlungen insbesondere bei Sonnenlicht, vermieden.

In den Fig.4 und 5 ist eine Positioniervorrichtung 35 für einen einzelnen Lichtleiter 8 gezeigt. Der Lichtleiter 8 ist in seinem Endbereich in Richtung einer Längsmittelachse 36 kegelstumpfförmig und in Richtung einer Stirnfläche 37 verjüngend ausgebildet, wobei ein Basisdurchmesser 38 des kegelstumpfförmigen Endbereiches größer ist als ein Außendurchmesser 39 des Lichtleiters 8. Durch den radialen Überstand wird ein ringförmig umlaufendes Arretierelement 40 gebildet, dem ein durch eine Stirnfläche 41 gebildetes Anschlagelement 42 eines den Lichtleiter 8 umfassenden Führungsgehäuses 43 zugeordnet ist. Das Arretierelement 40 und das Anschlagelement 42 des Führungsgehäuses 43 bilden eine Rückhaltevorrichtung 44 für den Lichtleiter 8 entgegen einer Zugwirkung in Richtung eines Pfeiles 45. Das im wesentlichen zylinderförmige Führungsgehäuse 43 mit zumindest einem Durchmesser 46, der gleich bzw. größer dem Basisdurchmesser 38 ist, erstreckt sich der Lichtleiter 8 mit einer konzentrisch angeordneten Aufnahmebohrung 47 umfassend von dem Arretierelement 40 in der der Stirnfläche 37 entgegengesetzt verlaufenden Richtung. Das dem Anschlagelement 42 des Führungsgehäuses 43 entgegengesetzte Stirnende 48 ist flanschartig ausgebildet. Die Aufnahmebohrung 47 ist in Richtung des Stirnendes 48 durch eine eine ringförmige Nut 49 bildende Vertiefung erweitert. An diese schließt in Richtung des Stirnendes 48 eine Öffnung 50 mit einem Durchmesser 51 an, wobei der Übergangsbereich der Öffnung 50 zum Stirnende 48 kreisbogenförmig erweitert ausgebildet ist.

Am flanschförmigen Endbereich des Führungsgehäuses 43 und mit diesem einstückig verbunden sind parallel zur Längsmittelachse 36 und in Richtung des Anschlagelementes 42 in radialer Richtung elastische, mit einem Sperrelement 52 versehene Schnappfinger 53 gleichmäßig am Umfang verteilt angeordnet, die eine Verbindungsvorrichtung 54 für das Führungsgehäuse 43 mit einem rohrförmigen, das Führungsgehäuse 43 umfassenden Positioniergehäuse 55 bilden. An der Außenmantelfläche des Positioniergehäuses 55 ist ein ringförmig rundum laufender Ansatz 56 für die Sperrelemente 52 der Verbindungsvorrichtung 54 angeordnet. Die durch einen Pfeil dargestellte beim Einrasten der Schnappfinger 53 aufgebrachte Aktionskraft 57 bewirkt eine durch einen Pfeil dargestellte Reaktionskraft 58 in der Führungsfläche 59. Die konische Anlagefläche 60 zwischen dem Führungsgehäuse 43 und dem Positioniergehäuse 55 bildet die Führungsfläche 59. Die Spannkraft bewirkt daher eine Selbstzentrierung des Führungsgehäuses 43.

Das Positioniergehäuse 55 ist im Bereich der Stirnfläche 37 des Lichtleiters 8 durch einen stirnseitig angeordneten Stützteil 61 geschlossen ausgebildet, wobei zwischen der Stirnfläche 37 und der dieser gegenüberliegenden Innenfläche des Stützteils 61 ein Freiraum 62 ausgebildet ist. Im Bereich des Stützteils 61 ist das Positioniergehäuse 55 mit einem zylinderförmigen oder kegelstumpfförmigen Führungsansatz 63 versehen, dessen Durchmesser kleiner ist, als ein Außendurchmesser 64 des Positioniergehäuses 55. Diesem Führungsansatz 63 ist eine gegengleich ausgebildete Aufnahmeöffnung 65 einer Halterung 66 für einen Linsenkörper 67 mit einer beispielsweise dem Linsenkörper 67 vorgesetzt angeordneten optischen Streuscheibe 68 zugeordnet. Für die einwandfreie optische Übertragung und die dauerhafte Qualität einer solchen Positioniervorrichtungen 35 ist es z.B. vorteilhaft, den Freiraum 62 im Bereich der Stirnfläche 37 und des Stützteils 61 mit einem hochtransparenten, verflüssigten Harz 69 zu befüllen, um einen die optische Übertragung beeinflussenden Luftspalt zwischen der Lichtaustrittsfläche und dem stirnseitigen Verschluß des Positioniergehäuses 55 zu vermeiden. Weiters ist es auch zweckmäßig, den Lichtleiter 8 im Bereich des Stirnendes 48 durch ein ihn umgebendes muffenförmiges, hochelastisches Schutzelement 70, welches in der Nut 49 und Öffnung 50 des Führungsgehäuses 43 eingebracht ist, gegen Knickgefahr und Oberflächenbeschädigung abzusichern.

Wie weiters besser aus Fig.5 ersichtlich ist, kann zur leichteren Montage einer solchen Positioniervorrichtung 35 das Führungsgehäuse 43 längs einer in der Längsmittelachse 36 verlaufenden Symmetrieebene 71 geteilt ausgeführt werden. Dabei können die Schnappfinger 53 gegengleich zur Symmetrieebene 71 versetzt jeweils einer Hälfte des Führungsgehäuses 43 zuge ordnet sein. Vorteilhaft ist es auch, wenn in der Teilungsebene vertieft angeordnete Zentrierbohrungen 72 und aus der Ebene ragende Zentrierdorne 73 für das Positionieren der halbschalenförmigen Teile des Führungsgehäuses 43 in diesem gegengleich angeordnet sind.

Vor allem dann, wenn das Führungsgehäuse 43 aus halbschalenförmigen Teilen gebildet ist, die bevorzugt Gleichteile sind und nur in einer um 180° verdrehten Lage zusammengefügt werden, kann durch die mittels der Schnappfinger 53 aufgebrachte Spannkraft bzw. die Reaktionskraft 58 gleichzeitig ein exaktes Positionieren der beiden halbschalenförmigen Teile aufeinander und deren Fixierung in der gewünschten Endlage sichergestellt werden.

In den Fig.6 und 7 ist eine Ausführungsvariante der Positioniervorrichtung 35 gezeigt. Dabei werden für gleiche Teile dieselben Bezugszeichen wie in den zuvor beschriebenen Figuren verwendet. In der Aufnahmeöffnung 65 der Halterung 66 für z.B. einen Linsenkörper ist das rohrförmige und an seinem der Halterung 66 zugeordneten Stirnende durch den Stützteil 61 geschlossene Positioniergehäuse 55 angeordnet. Diesem ist eine Rastvorrichtung 74 zugeordnet, die z.B. durch am Umfang der Halterung 66 gleichmäßig verteilt angeordnete, in radialer Richtung gegen eine Federwirkung verstellbare Kugeln 75, die in eine ringförmig umlaufende Nut 76 am Führungsansatz 63 des Positioniergehäuses 55 eingreifen, besteht. Durch diese Rastvorrichtung 74 wird eine Lagefixierung des Positioniergehäuses 55 in der Halterung 66 in achsialer Richtung erreicht.

Im rohrförmigen Positioniergehäuse 55 mit einer konzentrisch zur Längsmittelachse 36 verlaufenden Führungsfläche 77, deren kegelförmige Erweiterung in Richtung des Stirnendes 48 die Anlagefläche 60 bildet, ist eine hülsenförmige Stützscheibe 78, die den Lichtleiter 8 umfaßt, angeordnet. Diese Stützscheibe 78 bildet an ihrem dem Arretierelement 40 des Lichtleiters 8 zugeordneten Stirnende 79 das Anschlagelement 42 für das Arretierelement 40, wobei zwischen dem Anschlagelement 42 und dem Stützteil 61 des Positioniergehäuses 55 der Freiraum 62 für das Arretierelement 40 des Lichtleiters 8 gebildet wird.

Eine parallel zur Längsmittelachse 36 gemessene Breite 80 des Freiraumes 62 ist dabei größer als eine Höhe 81 des Arretierelementes 40. Im Bereich des dem Stirnende 79 gegenüberliegenden weiteren Stirnendes der Stützscheibe 78 ist in der zylindrischen Oberfläche eine eine Nut 82 bildende rundumlaufende Vertiefung für die Verbindungsvorrichtung 54 angeordnet. Der Nut 82 zugeordnet und in diese eingreifend, sind am Stirnende 48 des rohrförmigen Positioniergehäuses 55 in radialer Richtung elastische Sperrelemente 52 angeordnet, die einen Innendurchmesser 83 des Positioniergehäuses 55 um in etwa eine Nuttiefe 84 in Richtung zur Längsmittelachse 36 überragen.

Die Stützscheibe 78 weist einen in etwa C-förmigen Querschnitt auf, wobei ein Schlitz mit einer Breite 85, die kleiner ist als der Außendurchmesser 39 des Lichtleiters 8, in radialer Richtung erstreckend über die gesamte Länge der Stützscheibe 78 angeordnet ist. Durch diese Ausbildung der Stützscheibe 78 und eine entsprechende Elastizität des Materials der Stützscheibe 78 wird die Montage des mit den Arretierelement 40 versehenen Lichtleiters 8 erleichtert und trotzdem eine exakte Positionierung des Lichtleiters 8 in der Aufnahmebohrung 47 gewährleistet. Wie in den Zeichnungen dargestellt, können die Sperrelemente 52 zwecks Erreichung einer höheren radialen Elastizität auf fingerartigen Fortsätzen 86 angeordnet sein. Wie durch unterschiedlich dichte Schraffur in der Zeichnung der Fig.6 dargestellt, kann die Stützscheibe 78 von unterschiedlicher Materialbeschaffenheit sein, sodaß in Richtung des dem Stirnendes 79 gegenüberliegenden Stirnendes eine höhere Elastizität zum Schutz der Oberfläche des Lichtleiters 8 vorhanden ist.

Wie bereits in Fig.4 dargestellt, ist es ebenso zweckmäßig, den Freiraum 62 mit einem entsprechenden Harz 69 zu füllen.

In den Fig.8 und 9 ist eine andere Ausführungsform der Positioniervorrichtung 35 für einen einzelnen Lichtleiter 8 gezeigt. Ein in etwa hülsenförmiges Positioniergehäuse 55 weist einen Außendurchmesser 87 und ei ne konzentrisch zur Längsmittelachse 36 in Längsrichtung konisch verlaufende Aufnahmebohrung 88 auf. Der Lichtleiter 8 ist in einer Bohrung 89 einer kegelstumpfförmigen Stützhülse 90 angeordnet. Der Konus ist so gewählt, daß der Durchmesser im Bereich der Arretierelemente 40 und der das Anschlagelement 42 bildenden Stirnfläche 41 größer ist als der am der Stirnfläche 41 entgegengesetzt angeordneten Stirnende 91, wodurch die Rückhaltevorrichtung 44 den Lichtleiter 8 bei einer Krafteinwirkung in Richtung des Pfeiles 45 festhält. Im Bereich der Stirnfläche 41 sind am Positioniergehäuse 55 und mit diesem einstückig verbunden parallel zur Längsmittelachse 36 vorragende, in radialer Richtung elastisch verformbare hakenförmige Sperrglieder 92 - beispielsweise drei Stück über den Umfang des Positioniergehäuses 55 gleichmäßig verteilt - angeordnet. Ausnehmungen 93 in den Sperrgliedern 92 bilden die Aufnahme für einen rundumlaufenden Bund 94 einer zylinderförmigen Streuscheibe 95 bzw. des Linsenkörpers 67. Der zwischen dieser und der Stirnfläche 41 gebildete Freiraum 62 ist beispielsweise mit einem Harz 69, welches z.B. über Bohrungen 96 eingebracht werden kann, befüllt. Die Konizität der Aufnahmebohrung 88 und der Stützhülse 90 weist einen Spitzenwinkel von in etwa 6° bis 10°, vorzugsweise 8° auf.

In einem Mittelbereich ist am Positioniergehäuse 55 ein den Außendurchmesser 87 überragender, ringförmig umlaufender Anschlagbund 97 angeordnet, der auch durch ein vorzugsweise mehrgängiges Gewinde 98 gebildet sein kann. Für die Montage langer Lichtleiter 8 ist es vorteilhaft, die Stützhülse 90 in Form von zwei symmetrischen Halbschalen auszubilden, wie es weiters vorteilhaft ist, Ausnehmungen für das hochelastische Schutzelement 70 im Bereich des Stirnendes 91 vorzusehen.

Wie weiters aus Fig.10 ersichtlich, können die in Fig.8 beschriebenen und mit dem Gewinde 98 versehenen Positioniervorrichtungen 35 auch als Kupplungsanordnung 99 für zwei Lichtleiter 8 durch Verwendung einer in bekannter Weise ausgeführten, rohrförmigen Überwurfmutter 100 zum Einsatz kommen. Dazu ist an einem Endbereich der rohrförmigen Überwurfmutter 100 ein von einem Innendurchmesser 101, der geringfügig größer ist als ein Außendurchmesser 102 des Gewindes 98, ein in Richtung zur Längsmittelachse 36 vorspringender Ansatz 103 angeordnet. An dem dem Ansatz 103 entgegengesetzten Stirnende der zylinderförmigen Überwurfmutter 100 ist ein mit dem Gewinde 98 des Positioniergehäuses 55 zusammenwirkendes Innengewinde 104 angeordnet. Zur Verwendung der Positioniervorrichtung 35 als Kupplungsanordnung 99 kann nunmehr die Überwurfmutter 100 mit ihrem Innengewinde 104 über das Gewinde 98 einer Positioniervorrichtung 35 geschraubt werden, bis das Gewinde 98 in den Mittelbereich der Überwurfmutter 100 mit dem Innendurchmesser 101 kommt. Wird die Überwurfmutter 100 darauf in achsialer Richtung verschoben, kommt der Ansatz 103 als Anschlag 105 am Gewinde 98 zur Anlage, wodurch weiters eine zur ersten Positioniervorrichtung 35 spiegelbildlich gegenüberliegende weitere Positioniervorrichtung 35 durch Zusammenwirken des Gewindes 98 mit dem Innengewinde 104 spielfrei und zentrisch positioniert und spielfrei an die erste Positioniervorrichtung 35 gepreßt werden kann.

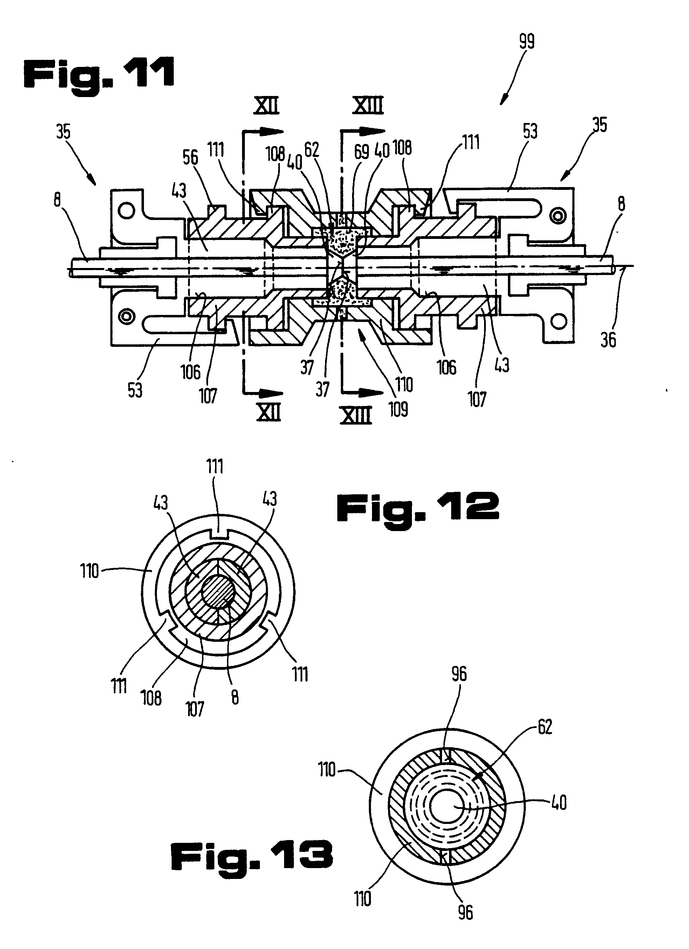

In den Fig.11 bis 13 ist eine weitere Ausführungsform einer Positioniervorrichtung 35 als Kupplungsanordnung 99 gezeigt. Dabei kommen die bereits in Fig.4 beschriebenen Führungsgehäuse 43 zur Anwendung. Das Führungsgehäuse 43 ist von einem rohrförmigen, mit einer durchgehenden Öffnung 106 versehenen und unterschiedliche Innendurchmesser aufweisenden Positioniergehäuse 107 umgeben.

Das Positioniergehäuse 107 weist an seinem Außenumfang parallel zum Ansatz 56 für die Schnappfinger 53 in Richtung des Arretierelementes 40 des Lichtleiters 8 einen weiteren ringförmig umlaufenden Ansatz 108 auf. Ein Kupplungselement 109 der Kupplungsanordnung 99 wird durch eine um eine senkrecht zur Längsmittelachse 36 angeordnete Ebene spiegelbildlich ausgebildete Verbindungsmutter 110 gebildet. Dazu sind in beiden Endbereichen der Verbindungsmutter 110 die Ansätze 108 der Positioniergehäuse 107 überdeckende, in radialer Richtung elastisch verformbare, hakenförmige Riegelelemente 111 angeordnet.

Wie der Darstellung in Fig.12 zu entnehmen ist, können beispielsweise drei dieser Riegelelemente 111 gleichmäßig am Umfang verteilt angeordnet sein. Der die Arretierelemente 40 in Richtung zum Kupplungselement 109 umgebende Freiraum 62 kann wie dargestellt, nach dem Kuppeln der Positioniervorrichtung 35 mit einem Harz 69 über die Bohrungen 96 befüllt werden. Da jedoch bei der gezeigten Ausführungsform die Stirnflächen 37 der Lichtleiter 8 ohne einen Luftspalt zu bilden aufeinander gepreßt werden, kann gegebenenfalls auf ein Vergießen mit dem Harz 69 verzichtet werden.

## Bezugszeichenaufstellung

1 Signalanordnung
2 Traggerüst
3 Signallicht
4 Signalschild
5 Lampenanordnung
6 Schaltkasten
7 Bündel
8 Lichtleiter
9 Lichtstrahl
10 Lampengehäuse
11 Bajonettverschluß
12 Lampe
13 Leuchtfaden
14 Stirnseite
15 Distanz
16 Filteranordnung
17 Lüftungsschlitz
18 Seitenwand
19 Seitenwand
20 Pfeil
21 Ende
22 Haltevorrichtung
23 Gehäuse
24 Frontscheibe
25 Linsenanordnung
26 Tragplatte
27 Linse
28 Führungsnippel
29 Bohrung
30 Ende
31 Lichtbündel
32 Strahlenbündel
33 Umlenkprisma
34 Lichtstrahl
35 Positioniervorrichtung
36 Längsmittelachse
37 Stirnfläche
38 Basisdurchmesser
39 Außendurchmesser
40 Arretierelement
41 Stirnfläche
42 Anschlagelement
43 Führungsgehäuse
44 Rückhaltevorrichtung
45 Pfeil
46 Durchmesser
47 Aufnahmebohrung

48 Stirnende
49 Nut
50 Öffnung
51 Durchmesser
52 Sperrelement
53 Schnappfinger
54 Verbindungsvorrichtung
55 Positioniergehäuse
56 Ansatz
57 Aktionskraft
58 Reaktionskraft
59 Führungsfläche
60 Anlagefläche
61 Stützteil
62 Freiraum
63 Führungsansatz
64 Außendurchmesser
65 Aufnahmeöffnung
66 Halterung
67 Linsenkörper
68 Streuscheibe
69 Harz
70 Schutzelement
71 Symmetrieebene
72 Zentrierbohrung
73 Zentrierdorn
74 Rastvorrichtung
75 Kugel
76 Nut
77 Führungsfläche
78 Stützscheibe
79 Stirnende
80 Breite
81 Höhe
82 Nut
83 Innendurchmesser
84 Nuttiefe
85 Breite
86 Fortsatz
87 Außendurchmesser
88 Aufnahmebohrung
89 Bohrung
90 Stützhülse
91 Stirnende
92 Sperrglied
93 Ausnehmung
94 Bund
95 Streuscheibe
96 Bohrung
97 Anschlagbund
98 Gewinde
99 Kuplungsanordnung
100 Überwurfmutter
101 Innendurchmesser
102 Außendurchmesser
103 Ansatz
104 Innengewinde
105 Anschlag

106 Öffnung
107 Positioniergehäuse
108 Ansatz
109 Kupplungselement
110 Verbindungsmutter
111 Riegelelement

**Ansprüche**

1. Positioniervorrichtung für das Ende eines Lichtleiters mit einem Führungsgehäuse und einer dieses durchsetzenden Aufnahmebohrung, in der der Lichtleiter gehaltert ist, dadurch gekennzeichnet, daß der Lichtleiter (8) mit einem radial über seinen Außenumfang vorspringenden Arretierelement (40) versehen ist, das gemeinsam mit einem diesem in der von seinem Ende abgewandten Richtung zugeordneten Anschlagelement (42) eine Rückhaltevorrichtung (44) bildet.

2. Positioniervorrichtung nach Anspruch 1, dadurch gekennzeichnet, daß die Rückhaltevorrichtung (44) einen Gegenhalter aufweist, der mit einem Stützteil (61) für eine Stirnfläche (37) des Lichtleiters (8) versehen ist, die zumindest in dem mit dem Querschnitt des Lichtleiters (8) fluchtenden Querschnittsbereich lichtdurchlässig ausgebildet ist.

3. Positioniervorrichtung nach Anspruch 1 oder 2, dadurch gekennzeichnet, daß zwischen der Stirnfläche (37) und den Arretierelementen (40) und bzw. oder dem Stützteil (61) eine Schicht aus transparentem, lichtdurchlässigem Harz (69) angeordnet ist.

4. Positioniervorrichtung nach einem oder mehreren der Ansprüche 1 bis 3, dadurch gekennzeichnet, daß das Führungsgehäuse (43) das Anschlagelement (42) bildet und im Bereich einer Symmetrieebene der Aufnahmebohrung (47) geteilt ausgebildet ist und vorzugsweise die beiden Teile des Führungsgehäuses (43) identisch ausgebildet sind.

5. Positioniervorrichtung nach einem oder mehreren der Ansprüche 1 bis 4, dadurch gekennzeichnet, daß ein Durchmesser der Aufnahmebohrung (47) einem Außendurchmesser (39) des Lichtleiters (8) entspricht.

6. Positioniervorrichtung nach einem oder mehreren der Ansprüche 1 bis 5, dadurch gekennzeichnet, daß ein Durchmesser (46) der Aufnahmebohrung größer ist als ein Basisdurchmesser (38) eines die Arretierelemente (40) umgebenden, konzentrisch zum Lichtleiterquerschnitt angeordneten Hüllkreises.

7. Positioniervorrichtung nach einem oder mehreren der Ansprüche 1 bis 6, dadurch gekennzeichnet, daß das Anschlagelement (42) durch eine Stützscheibe (78) bzw. -hülse gebildet ist, die radial elastisch verformbar und mit einem Schlitz versehen oder entlang einer Symmetrieebene entlang einer Längsmittelachse (36) einer Aufnahmebohrung (88) geteilt ausgebildet ist.

8. Positioniervorrichtung nach einem oder mehreren der Ansprüche 1 bis 7, dadurch gekennzeichnet, daß die Bohrung (89) des Anschlagelementes (42) einen Innendurchmesser aufweist, der im wesentlichen dem Außendurchmesser (39) des Lichtleiters (8) entspricht.

9. Positioniervorrichtung nach einem oder mehreren der Ansprüche 1 bis 8, dadurch gekennzeichnet, daß die zweiteilige Stützhülse (90) mit einem kegelförmigen Außenmantel versehen ist, der sich vom Arretierelement (40) in Richtung des Lichtleiters (8) verjüngt und daß der Stützhülse (90) eine kegelförmige Stützfläche in der Aufnahmebohrung (88) bzw. dem Füh rungsgehäuse (43) zugeordnet ist, wobei vorzugsweise der Kegelwinkel in Abhängigkeit vom Material des Positioniergehäuses (55) bzw. der Stützhülsen (90) so gewählt ist, daß eine Selbsthemmung erreicht ist.

10. Positioniervorrichtung nach einem oder mehreren der Ansprüche 1 bis 9, dadurch gekennzeichnet, daß das Führungsgehäuse (43) mit einer Führungsfläche (59) für den Stützteil (61) versehen ist.

11. Positioniervorrichtung nach einem oder mehreren der Ansprüche 1 bis 10, dadurch gekennzeichnet, daß zwischen dem Positioniergehäuse (55) und dem Führungsgehäuse (43) eine Verbindungsvorrichtung (54) vorgesehen ist.

12. Positioniervorrichtung nach einem oder mehreren der Ansprüche 1 bis 11, dadurch gekennzeichnet, daß die Verbindungsvorrichtung (54) durch vorzugsweise am Führungsgehäuse (43) angeformte, einen radial vorstehenden Ansatz (56) des Positioniergehäuses (55) umgreifende, in radialer Richtung elastisch verformbare Schnappfinger (53) gebildet ist.

13. Positioniervorrichtung nach einem oder mehreren der Ansprüche 1 bis 12, dadurch gekennzeichnet, daß das Arretierelement (40) durch eine thermische Stauchung des Endes des Lichtleiters (8) auf einen Basisdurchmesser (38), der größer als der Außendurchmesser (39) des Lichtleiters (8) gebildet ist.

14. Positioniervorrichtung nach einem oder mehreren der Ansprüche 1 bis 13, dadurch gekennzeichnet, daß die beiden Teile des Führungsgehäuses (43) mit einer Zentriervorrichtung versehen sind, die beispielsweise durch Zentrierdorne (73) und diesen zugeordnete gegengleiche Zentrierbohrungen (72) gebildet ist.

15. Positioniervorrichtung nach einem oder mehreren der Ansprüche 1 bis 14, dadurch gekennzeichnet, daß auf der von der Rückhaltevorrichtung (44) abgewendeten Seite des Führungsgehäuses (43) zwischen diesem und dem Lichtleiter (8) ein aus elastisch verformbarem Material bestehendes Schutzelement (70) angeordnet ist.

16. Positioniervorrichtung nach einem oder mehreren der Ansprüche 1 bis 15, dadurch gekennzeichnet, daß das Schutzelement (70) über einen vorspringenden Bund in einer Nut (49) des Führungsgehäuses (43) gehaltert ist.

17. Positioniervorrichtung nach einem oder mehreren der Ansprüche 1 bis 16, dadurch gekennzeichnet, daß der Stützteil (61) in seinem dem Ende des Lichtleiters (8) zugewandten Endbereich mit einem Führungsansatz (63) versehen ist.

18. Positioniervorrichtung nach einem oder mehreren der Ansprüche 1 bis 17, dadurch gekennzeichnet, daß der Führungsansatz (63) in einer Halterung (66) einer Linsenanordnung angeordnet ist.

19. Positioniervorrichtung nach einem oder mehreren der Ansprüche 1 bis 18, dadurch gekennzeichnet, daß das Schutzelement (70) mit einem Schlitz versehen oder zweiteilig ausgebildet ist.

20. Positioniervorrichtung nach einem oder mehreren der Ansprüche 1 bis 19, dadurch gekennzeichnet, daß das Führungsgehäuse (43) mit einem sich zumindest bis in den Bereich der Stirnfläche (37) des Lichtleiters (8) erstreckenden Fortsatz versehen ist, der einen inneren Durchmesser (46) aufweist, der größer ist als der Basisdurchmesser (38) des Hüllkreises.

21. Positioniervorrichtung nach einem oder mehreren der Ansprüche 1 bis 20, dadurch gekennzeichnet, daß das Führungsgehäuse (43) bzw. die Teile des Führungsgehäuses (43) bezogen auf eine Stirnseite des Fortsatzes spiegelsymmetrisch ausgebildet sind und zwischen den beiden einander gegenüberliegenden Anschlagelementen (42) die Arretierelemente (40) von zwei aufeinander zugerichteten, einander unmittelbar benachbarten Lichtleitern (8) angeordnet sind.

22. Positioniervorrichtung nach einem oder mehreren der Ansprüche 1 bis 21, dadurch gekennzeichnet, daß zwei Führungsgehäuse (43) mit den Stirnseiten der Fortsätze spiegelsymmetrisch zueinander angeordnet und über eine Kupplungsanordnung (99) z.B. eine Holländerverschraubung oder über eine Schnappvorrichtung mit radial beweglichen Schnapparmen verbunden sind.

23. Positioniervorrichtung nach einem oder mehreren der Ansprüche 1 bis 22, dadurch gekennzeichnet, daß zwischen den einander zugewandten Stirnflächen (37) der beiden Lichtleiter (8) eine Schicht aus transparentem, lichtdurchlässigem Harz (69) angeordnet ist.

24. Positioniervorrichtung nach einem oder mehreren der Ansprüche 1 bis 23, dadurch gekennzeichnet, daß die beiden spiegelsymmetrisch zueinander angeordneten Führungsgehäuse (43) über die diesen zugeordneten Stützteile (61) oder einen diesen beiden Führungsgehäusen (43) gemeinsam zugeordneten, symmetrisch ausgebildeten Stützteil (61) miteinander verbunden sind.

25. Positioniervorrichtung nach einem oder mehreren der Ansprüche 1 bis 24, dadurch gekennzeichnet, daß der Stützteil (61) die Kupplungsanordnung (99) zwischen den beiden Führungsgehäusen (43) bildet.

26. Positioniervorrichtung nach einem oder mehreren der Ansprüche 1 bis 25, dadurch gekennzeichnet, daß die Verbindung zwischen den einzelnen Teilen des Führungsgehäuses (43) und bzw. oder zwischen einzelnen Führungsgehäusen (43) und bzw. oder zwischen dem Führungsgehäuse (43) und dem Stützteil (61) über einen Kleber oder eine Ultraschallverschweißung oder dgl. erfolgt.

27. Verfahren zur Halterung der Enden von einzelnen Lichtleitern in einem Führungsgehäuse über eine Rückhaltevorrichtung, bei der der Lichtleiter in einer vorbestimmten Lage zu einer Führungsfläche des Traggehäuses bzw. eines Stützteils gehaltert ist, dadurch gekennzeichnet, daß der Lichtleiter (8) im Bereich eines Endes in eine Form eingespannt wird, die einen den Außendurchmesser (39) des Lichtleiters überragenden sich in Richtung des Endes des Lichtleiters erstreckenden Hohlraum aufweist, der einen größeren Querschnitt aufweist, als der Außendurchmesser (39) des Lichtleiters (8) und der Lichtleiter (8) eine dem Ende desselben zugewandte Formfläche um eine Länge, die größer ist als eine Tiefe des Formhohlraums, überragt, worauf das in den Formhohlraum hineinragende Ende des Lichtleiters (8) soweit erhitzt wird, daß es einen teigigen Zustand erreicht und durch Druckbeaufschlagung der Formhohlraum mit dem Material des Lichtleiters (8) gefüllt wird.

28. Verfahren nach Anspruch 27, dadurch gekennzeichnet, daß das Lichtleitermaterial auf den Schmelzpunkt des Lichtleitermaterials erhitzt wird, worauf die Erhitzung so lange fortgesetzt wird, bis der Formhohlraum mit dem Kunststoffmaterial gefüllt ist.

29. Verfahren nach Anspruch 27 oder 28, dadurch gekennzeichnet, daß während des Erhitzens des Lichtleiters (8) die an den Formhohlraum anschließenden Teile des Lichtleiters (8) gekühlt werden.

**Fig.1**

**Fig.2**

Fig.3

# Fig. 4

# Fig. 5

EP 0 398 266 A2

# Fig. 6

# Fig. 7

# Fig. 8

# Fig. 9

# Fig. 10

**Fig. 11**

**Fig. 12**

**Fig. 13**